# EUROPÄISCHE PATENTSCHRIFT

(11) **EP 1 863 228 B1**
(45) Veröffentlichungstag und Bekanntmachung des Hinweises auf die Patenterteilung: **14.03.2012**
(21) Anmeldenummer: 07010432.8
(22) Anmeldetag: 25.05.2007
(51) Int. Cl.: H04L 12/407, G02B 21/00, G02B 21/36

(54) **Laser-Scanning-Mikroskop mit Hochgeschwindigkeitsdatenverarbeitung**
Laser scanning microscope with high-speed data processing
Microscope à balayage par laser avec traitement des données à grande vitesse

(30) Priorität: 31.05.2006 DE 102006025445
(43) Veröffentlichungstag der Anmeldung: 05.12.2007
(73) Patentinhaber: Carl Zeiss MicroImaging GmbH, 07745 Jena (DE)
(72) Erfinder: Möhler, Gunter, 07745 Jena (DE); Liedtke, Mirko, 07745 Jena (DE)
(74) Vertreter: Hampe, Holger

(56) Entgegenhaltungen:
- EP-A- 0 527 531
- WO-A-2004/036898
- WO-A-2004/104645
- US-A- 4 972 258
- US-A1- 2004 064 578

## Beschreibung

Die Erfindung bezieht sich auf ein Laser-Scanning-Mikroskop gemäß dem Oberbegriff des Anspruchs 1. Es umfaßt Proben-Beleuchtungs- und Detektormitteln, die zur Bildgewtnnung eine Probe rasternd beleuchten und detektierend abtasten, eine Echtzeit-Steuerungseinrichtung, welche die Beleuchtungs- und Detektormittel zur Beleuchtung und Detektion ansteuert und Detektionssignale ausliest, wobei die Steuerungseinrichtung Ansteuerung und Auslesen synchron zu einem die Rasterung festlegenden Pixeltakt durchfürt, und ein zwischen die Steuerungseinrichtung und die Beleuchtungs- und Detektormittel geschaltetes Dateninterface, das mit der Steuerungseinrichtung über einen parallelen, bidirektionalen Datenstrom und mit den Beleuchtungs- und Detektormitteln über einen seriellen, bidirektionalen Hochgeschwindigkeittsdatenstrom kommuniziert und Datenkonversion von parallel in seriell bzw. zurück ausführt. Die Erfindung bezieht sich weiter auf Verfahren zur Data kommunikation in einem Laser-Scanning-Mikroskop gemäß dem Oberbegriff des Anspruchs 11.

Bei einem Laser-Scanning-Mikroskop dieser Art, wie es beispielsweise von der Cart Zeiss AG unter der Bezeichnung LSM 510 angeboten wird oder in der WO 2004/104645 beschrieben ist, erfolgt eine Bildgeswinnung, indem eine Probe pixelweise mit Anregungs- oder Beleuchtungsstrahtung beaufschlagt und abgetastet wird. Das Bild entsteht, indem die festgestellte Strahlungsintensität den entsprechenden Pixelkoordinaten zugeordnet und so zu einem Bild zusammengefügt wird. Für Beleuchtung und Detektion ist somit eine pixelsynchrone Abstimmung von Beleuchtungs- und Detektormitteln, insbesondere eines Scanners, d.h. einer Ablenkeinrichtung erforderlich, um die Bildinformation zu gewinnen. Dies hat zur Folge, daß bei der Ansteuerung sowie dem Auslesen eine möglichst hohe Datenübertragungsrate verwendet werden sollte, da sich die Geschwindigkeit und das Volumen der Dalenübertragung automatisch auf die Zeitdauer, die für das Aufnehmen eines Bildes benötigt wird, auswirkt. Gerade bei biologischen Proben möchte man ein Bild aber möglichst schnell erhalten, z.B. um biologische Prozesse analysieren zu können. Dabei kommt es nicht nur auf die Datenrate, d.h. das Produkt aus Datenpaketgröße und Übertragunsfrequenz an, sondern auch auf die Reaktionszeit, mit der die Kommunikation zwischen Echtzeit-Steuerungseinrichtung und Beleuchtungs- und Detektormitteln abläuft. Für diese ist die Übertragungsfrequenz ein bestimmender Faktor.

Dabei ist auch zu beachten, daß nicht nur die Ansteuerung der Ablenkeinrichtung oder der Beleuchtungseinheiten, z.B. Laser etc., pixelsynchron erfolgen muß, sondern daß moderne hochempfindliche Detektoreinheiten zum Auslesen der den Pixeln zuzuordnenden Strahlungsintensität ebenfalls einer zum Teil aufwendigen Ansteuerung bedürfen. Als Beispiel seien Photomultipliereinheiten (PMT) erwähnt, die unter anderem der Steuerung von Strahtungsintegrationsvorgängen und von Ausleseprozessen bedürfen. Es müssen für jedes Pixel Daten zur PMT übertragen werden und auch Daten von der PMT ausgelesen werden. Letztendlich ist man deshalb bemüht, die Datenkommunikation so schnell zu gestalten, daß sie nicht das zeitbestimmende Glied in der Kette ist, was zur Folge hat, daß die Datenkommunikation schnell genug sein sollte, um innerhalb der Mindestzeit, die zur Detektion der Strahlung eines Pixels vom Detektor benötigt wird (sog. Pixelzeit), den dazu nötigen Datenverkehr abzuwickeln.

Zur Hochgeschwindigkeitsdatenkommunikation sind in der Datenverarbeitungstechnik verschiedene Ansätze bekannt, die Jedoch entweder erheblichen gerätetechnischen Aufwand benötigen oder unzureichende Gaschwindigkeitsleistungen haben. So schildert z.B. die EP 0527531 A1 einen Datenbus mit einer Master-Station und mehreren Slave- Stationen. In der Kommunikation adressiert zuerst die Master-Station die gewünschte Slave-Station und sendet dann Datenpakete umfassend Steuer- und Datenbits, die bis zur nächsten Adressierung von der Master-Station aufgenommen werden.

Der Erfindung liegt deshalb die Aufgabe zugrunde, ein Mikroskop bzw. Verfahren der eingangs genannten Art so weiterzubilden, daß aufwandsgering eine Ansteuerung der Beleuchtungs- und Detektormittel erreicht ist und zugleich die erzielte Datenrate es erlaubt, für Jedes Pixel innerhalb der detektorseitig vorgegebenen Pixelzeit die erforderlichen Daten zu Übertragen.

Diese Aufgabe wird erfindungsgemäß mit einem Laser-Scanning-Mikroskop der genannten Art gemäß Anspruch 1 gelöst, bei dem der Hochgeschwindigkeitsdatenstrom von den Beleuchtungs- und Detektormitteln zum Dateninterface aus Datenpaketen mit Datenbits und Typbits und ohne weitere Header- oder Protokollbits aufgebaut ist, die Datenbits Daten zu den Beleuchtungs- und Detektormitteln enthalten und die Typbits die Art der Daten kodieren und in den Beleuchtungs- und Detektormitteln ggf. auch in der Steuerungseinrichtung Typinformationen abgelegt sind, die Verarbeitungsaufgaben für durch die Typbits kodierten Datenarten definieren, und die Beteuchungs- und Detektormittel beim Senden in einer Typauswertung die Typbits für die Datenarten setzen. Die Aufgabe wird weiter gemäß Anspruch 11 mit einem Verfahren der genannten Art gelöst, bei dem der Hochgeschwindigkeitsdatenstrom zwischen den Beleuchtungs- und Detektormitteln und dem Dateninterface aus Datenpaketen mit Datenbits und Typbits und ohne weitere Header- oder Protokollbits aufgebaut ist, die Datenbits Daten von den Beleuchtungs- und Detektormitteln enthalten und die Typbits die Art der Daten kodieren und in den Beleuchtungs- und Detektormitteln und der Steuerungseinrichtung Typinformationen abgelegt sind, die sich auf Venarbeitungsaufgaben für durch die Typbits kodierten Datenarten beziehen, und die Beleuchtungs- und Detektormittel und/oder die Steuerungseinrichtung beim Senden in einer Typvorgabe für die Datenarten die Typbits setzen und die Steuerungseinrichtung und/oder die Beleuchtungs- und Detektormittel in einer Typauswertung anhand der Typbits die Datenarten ermitteln und die in den Datenbits kodierten Daten entsprechend verarbeiten.

Erfindungsgemäß wird für die Obertragung von den Beleuchtungs- und Detektormitteln auf Header- oder Protokolldaten, wie sie bei Oblichen Hochgeschwindigkeitsdatensystemen (z.B. Firewire oder USB) bei der seriellen Kommunikation verwendet werden und wie sie bei einer normalen parallen/seriell-Wandlung üblicherweise auftreten, verzichtet. Es ist also im Datenpaket kein Datenkopf mehr vorhanden, wer z.B. die Daten sendet, an welchen Adressaten im Bus sie gerichtet sind, was bei Fehlerbehandlungen zu machen ist, etc. Der Datenstrom ist von den Beleuchtungs- und Detektormitteln zur Steuerungseinrichtung ausschliβiich aus Datenbits und Typbits aufgebaut, wobei tetztere eine Information Ober die Art der in den Datenbits gespeicherten Daten kodieren. Jedes an die den Datenstrom führende Verbindung angeschlossene Modul macht also beim Absetzen der Daten eine Typbitvorgabe. Die Typbits unterscheiden sich von Headerbits normaler Kommunikationsdatenströme dadurch, daß sie keine allgemeinen informationen enthalten, sondern lediglich in Kombination mit Typangaben, die sender- und empfängerseitig vorgehalten sind, und der darauf basierten empfängerseitigen Typauswertung eine Aussage Ober die Verarbeitung, der die Daten in den Datenbits zu unterwerfen sind, treffen. Der Hochgeschwindigkeitsdatenstrom ist somit mikroskopindividuellangepaßt und erfordert in der Regel auf der Empfänger- und Senderseite abgespeicherte Typinformationen, wie die Daten aufzubauen sind bzw. zu verarbeiten sind. Diese Art der Datenkommunikation erreicht zum einen die Eliminierung jeglicher redundanter information und erhöht damit die effektive Nutzrate für die zu übertragenden Daten. Zum anderen erleichtert sie den datentechnischen Aufwand auf der Sender- und Empfängerseite, da die Typvorgabe wie die Typauswertung anhand der Typbits bei den Sendern bzw. Empfängern sehr einfach ausgeführt werden kann und den Empfängern sofort die nötige information verleiht, ob und ggf. wie sie die Datenbits verarbeiten müssen, oder ob nicht. Zugleich müssen die Sender keine Adreßdaten verwalten und kommunizieren.

Die erfindungsgemäße Umsetzung des parallelen, bidirektionalen Datenstroms in den seriellen, bidirektionalen Hochgeschwindigkeitsdatenstrom, welcher auf die erwähnte Weise an die Anforderungen im Laser-Scanning-Mikroskop angepaßt ist, erleichtert weiter die Verkabelung im Mikroskop, da serielle Datenkabel weniger Platz benötigen. Zudem kann für die Echtzeit-Steuerungseinrichtung ein Standardcomputer verwendet werden, und aufwendige bzw. kostenträchtige Sonderschnittstellen auf Seiten der Echtzeit-Steuerungseinrichtung können enthallen. Die Wandlung in den/aus dem mikroskopindividuellen Hochgeachwindigkeltsdatenstrom findet erst in dem als Schnittstelle des Mikroskops wirkenden Dateninterface statt.

Zwar ist das erfindungsgemäße Konzept für die Kommunikation von den Beleuchtungs- und Detektormitteln zur Steuerungseinrichtung besonders vorteilhaft, jedoch ist ein Einsatz im Rückkanal, also von der Steuerungseinrichtung weg gleichermaßen möglich.

Die Verwendung der Hochgeschwindigkeltsdatenübertragung mit Typbits hat weiter den Vorteil, daß jedes aus Datenbits und Typbits aufgebaute Datenpaket nun simultan von mehreren Stellen der Beleuchtungs- und Detektormittel ausgesendet oder auch empfangen werden kann, wenn nämlich die Typauswertung für eine Datenart ergibt, daß sie an verschiedenen Stellen, z.B. von verschiedenen Einheiten der Beleuchtungs- und Detektormittel relevant ist. Bei herkömmlicher adreßbasierter Datenkommunikation wäre eine gleichzeitige Aussendung eines Datenpakets von/an verschiedene Einheiten schlichtweg unmöglich und man müßte stattdessen mehrere Datenpakete mit verschiedenen Adressen versehen und zeitversetzt durch den Hochgeschwindigkeitsdatenstrom übertragen. Es ist leicht verständlich, daß die dann erreichte Nutz-Datenübertragungsrate um ein Vielfaches geringer wäre.

Üblicherweise sind Laser-Scanning-Mikroskope in Einzeimodule aufgeteilt, die bei der Beleuchtung und Abtastung zusammenwirken. Ein Beispiel hierfür sind verschiedene, in ein Mikroskop integrierbare Beleuchtungsmodule, welche Strahlung verschiedener Wellenlängen bereitstellen. Auch ist es bekannt, Laser-Scanning-Mikroskope mit verschiedenen Detektomodulen, die z.B. unterschiedliche spektrale Analysefähigkeiten haben, zu versehen. Für eine solche modulare Bauweise ist es zweckmäβig, einen Datenmanager vorzusehen, der mit den Einzelmodulen kommuniziert und die Einzeimodule entsprechend den seriellen Hochgeschwindigkeitsdatenstrom anbindet, da die Einzeimodule zwar aufeinander abgestimmt betrieben werden müssen, jedoch einzeln meist für die Kommunikation nicht die volle Datenrate des Hochgeschwindigkeitsdatenstroms benötigen; diese Datenrate ist erst Im Zusammenspiel aller Module auf Seiten der Echtzeit-Steuerungseinrichtung erforderlich.

Es ist für diese Ausgestaltung natürlich vorteilhaft, die seriellen Einzeldatenströme (die z.B. gemäß der bekannten LVDS-Datenübertragung ausgeführt werden können) zwischen den Einzelmodulen und dem Datenmanager ebenfalls aus Datenbits und Typbits und unter Verzicht auf weitere Headerbits aufzubauen, da ansonsten von den Einzelmodulen Adreß- und Headerinformationen erzeugt und auch übertragen werden müßten. Zweckmäßigerweise wird der Datenmanager dann entsprechende Anschlüsse für die Einzelmodule aufweisen. Günstigerweise arbeitet der Datenmanager weiter mit einem festen Auftellungsscherma, mit dem er die Datenpakete der Einzelmodule In den Hochgeschwindigkeitsdatenstrom speist. Eine zeitaufwendige oder prozessorbedürfüge Analyse der Einzeidatenströme im Datenmanager ist dann nicht erforderlich, allerdings muß die Echtzeit-Steuerungseinrichtung bzw. das Dateninterface die am Datenmanager fest eingestellte Zusammenführung des Hochgeschwindigkeitsdatenstromes aus den Einzeldatenströmen berücksichtigen, d.h. die Datenpakete der Einzeldatenstrome werden vom Dateninterface bzw. der Echtzeit-Steuerungseinrichtung entsprechend im Hochgeschwindigkeitsdatenstrom angeordnet, so daß die Auftellung am Datenmanager sich in der Struktur des Hochgeschwindigkeitsdatenstromes widerspiegelt. Da ein modular aufgebautes Laser-Scanning-Mikroskop aber nur selten verändert wird bzw. im Falle des Umbaus feste Anschlußregeln vorgegeben werden können, ist diese Einschränkung nicht hindertich. Ggf. kann zusätzlich oder alternativ am Dateninterface und/oder der Echtzeit-Steuerungseinrichtung eine Einstellvorrichtung (z.B. als Software- oder Hardwarestelleinrichtung) vorgesehen werden, über die an die Einzeldatenstromanschlüase angebundenen Einzelmodule mitgetellt wird/werden, so daß das Dateninterface bzw. die Steuereinrichtung weiß, wie die Datenpakete im Hochgeschwindigkeitsdatenstrom aus den Einzeldatenströmen zusammengesetzt sind.

Zusammengenommen ist deshalb für ein modulares Mikroskop vorteilhafterweise vorgesehen, daß die Beleuchtungs- und Detektormittel mehrere Einzelmodule aufweist, die bei der Beleuchtung und Ablastung zusammenwirken, zwischen das Dateninterface und die Einzelmodule der Beleuchtungs- und Detektormittel ein Datenmanager geschaltet ist, der mit den Einzelmodulen kommuniziert und aus seriellen Einzeldatenströmen von den Einzelmodulen den Hochgeschwindigkeitsdatenstrom zusammenführt und auf das Dateninterface leitet, wobei die seriellen Einzeldatenströme zwischen Datenmanager und Einzelmodulen ebenfalls aus Datenbits und Typbits und ohne weitere Headerbits augebaut sind die Typinformationen in den Einzelmodulen abgelegt sind und die Einzetmodule die Typauswertung und die Verarbeitung der in den Datenbits kodierten Daten ausführen.

Natürlich kann dieses Konzept auch in Kommunikationsrichtung von der Echtzeitsteuerung zu den Einzelmodulen verwendet werden.

Die Arbeit des Datenmanagers ist besonders einfach, wenn die Einzeldatenströme Datenpakete führen, die ein Bruchteil so lang sind, wie die Datenpakete des Hochgeschwindigkeitsdatenstromes. Vorzugsweise sind die Datenpakete der Einzeldatenströme halb so lang, wie die des Hochgeschwindigkeitsdatenstromes. Dann setzt der Datenmanager einfach jedes Hochgeschwindigkeitsdatenstrom-Datenpaket aus zwei Hälften zusammen, die aus zwei Einzeldatenströmen stammen. Die Datenpaketfrequenz jedes Einzeldatenstromes ist dann gleich groß, wie die des Hochgeschwindigkeitsdatenstromes, jedoch bei halbierter Paketlänge. Genügt für ein Einzelmodul die halbe Frequenz des Hochgeschwindigkeitsdatenstromes, kann der Datenmanager jedes Paket des Hochgeschwindigkeitsdatenstromes abwechselnd geteilt aus zwei Einzeldatenströmen aufbauen, so daß insgesamt vier Einzeldatenströme verwendet werden, die jeweils die halbe Frequenz des Hochgeschwindigkeitsdatenstromes und die halbe Paketlänge aufweisen. Der eine Hochgeschwindigkeitsdatenstrom ist dann einfach aus vier Einzeldatenströmen zusammengesetzt. Dies ist natürlich auch bei gleichzeitigem Senden (Broadcast) der Einzeldatenpakete möglich.

Gleichermaßen ist natürlich auch eine Skalierung möglich, d.h. es können zwei verschiedene Dateninterface bzw. ein Doppel-Dateninterface vorgesehen werden, die bzw. das den parallelen Datenstrom von der Echtzeit-Datensteuerungseinrichtung in zwei Hochgeschwindigkeitsdatenströme umsetzt. Dies kann bei sehr komplexen Laser-Scanning-Mikroskopen zweckmäßig sein.

Möchte man eine Vielzahl von Einzelmodulen ansprechen, kann es weiter günstig sein, daß mehrere Einzelmodule an einen gemeinsamen Einzeldatenstrom angeschlossen sind und diesen nach Art eines Datenbusses nutzen, wobei die Typauswertung wiederum implizit festlegt, welches Einzelmodul bzw. welche Einzelmodule die in den Datenbits kodierten Daten eines Datenpaktes verarbeiten bzw. im Sendefall senden.

In Laser-Scanning-Mikroskopen haben die Beleuchtungs- und Detektormittel neben pixelsynchron anzusteuernden Elementen üblicherweise auch Stellelemente, die meist über eine Rückmeldefunktion an die Steuereinheit verfügen und die für den Betrieb geeignet bzw. eingestellt werden müssen, ohne daß eine im Pixeltakt erfolgende Einwirkung bzw. Verstellung erforderlich ist. Beispiele für solche Stellelemente sind die Pinholeverstellmechanik vor Detektoren, die Einstellung von Treibern akustooptischer Filter in Beleuchtungseinheiten, die Antriebe von Farbteilerwechslern oder Shuttern, Sicherheitsblenden o.ä. All solche Bauelemente müssen zwar während des Betriebes des Laser-Scanning-Mikroskops eine bestimmte Stellung haben, jedoch ist eine im Pixeltakt erfolgende Ansteuerung/Rückmeldung entbehrlich. Üblicherweise werden solche Stellelemente deshalb bislang mit langsam arbeitenden Datenbussen, z.B. dem sog. CAN-Busses angesteuert, was zur Folge hat, daß in herkömmlichen Mikroskopen neben der Hochgeschwindigkeitsdatenkommunikation auch noch ein (nicht pixelsynchroner) langsamerer (CAN-)Bus durch das gesamte Gerät geführt werden muß.

Im erfindungsgemäßen Laser-Scanning-Mikroskop ist es nun möglich, diese separate Stelldaten-Bus-Vernetzung des gesamten Mikroskops entbehrlich zu machen, indem die Stelldaten oder Rückmeldedaten die beispielsweise den Einheiten gemäß dem erwähnten CAN-Busprotokoll zugeführt werden, mit einer bestimmten Typkodierung in den Hochgeschwindigkeitsdatenstrom eingebettet sind und die Beleuchtungs- und Detektormittel die Stelldaten bzw. das Dateninterface, der Datenmanager oder die Steuerungseinheit die Rückdaten anhand der vom jeweiligen Sender vorgenommenen Typkodierung aus dem Hochgeschwindigkeitsdatenstrom extrahieren und an die Stellelemente leiten bzw. verarbeiten. Die langsamen und nicht notwendigerweise pixelsynchronen Stelldaten werden also von der Echtzeit-Steuerungseinrichtung bzw. dem Dateninterface in den Hochgeschwindigkeitsdatenstrom eingespeist und empfängerseitig, d.h. bei den Beleuchtungs- und Detektormitteln extrahiert. Umgekehrtes gilt für Rückdaten. Es ist deshalb in einer vorzugsweisen Weiterbildung des Mikroskops vorgesehen, daß die Beleuchtungs- und Detektormittel Stellelemente aufweisen, welche im Mikroskopbetrieb asynchron zum Pixeltakt ansteuerbar sind, wobei die Steuerungseinrichtung entsprechende Stelldaten für die Stellelemente bereitstellt, die Stelldaten z.B. mit einer bestimmten Typkodierung oder Adresse in den Hochgeschwindigkeitsdatenstrom eingebettet sind und die Beleuchtungs- und Detektormittel die Stelldaten extrahieren und an die Stellelemente leiten. Alternativ oder zusätzlich erfolgt dies im Rückkanal.

Eine zweckmäßige Realisierung für die Weiterleitung der Stelldaten an die Stellelemente ist der bereits erwähnte CAN-Bus. Es ist deshalb in einer Weiterbildung vorgesehen, daß mindestens ein Einzelmodul einen CAN-Bus für mindestens ein dem Einzelmodul zugeordnetes oder an ihm vorgesehenes Stellelement bereitstellt und die Stelldaten/Rückdaten mittels eines Konvertierungselementes in/aus CAN-Busdaten konvertiert.

Um bei herkömmlichen Mikroskopen die Stellelemente, welche z.B. über den CAN-Bus angesteuert werden, zu testen, ist üblicherweise ein vollständiger Betrieb des Mikroskops nötig, da alle Stellelemente an einem gemeinsamen CAN-Bussystem angeschlossen sind. Die erfindungsgemäße Ausgestaltung, bei der die Stelldaten aus dem/in den Hochgeschwindigkeitsdatenstrom von den Beleuchtungs- und Detektormitteln, d.h. üblicherweise von den Einzelmodulen, gewandelt werden, erlaubt nun eine Ausgestaltung, in der die Einzelmodule bzw. einzelnen Bestandteile der Beleuchtungs-Detektormittel individuell getestet werden können. Dazu ist vorteilhafterweise ein Diagnoseanschluß zum CAN-Bus im Einzelmodul vorgesehen, über den zu Diagnose- und Prüfzwecken eine direkte CAN-Busansteuerung des Stellelementes möglich ist. Der Diagnoseanschluß befindet sich also zwischen dem Konvertierungselement, das aus dem/in den Hochgeschwindigkeitsdatenstrom die Stelldaten wandelt, und dem Stellelement. Dadurch ist es möglich, ein Stellelement individuell ohne Betrieb des übrigen Mikroskops in seiner Funktionalität zu überprüfen.

Eine weitergehende Überprüfung ist möglich, wenn das Konvertierungselement, welches z.B. die CAN-Busdaten bereitstellt, auch eine Rückkonversion der Stelldaten in den seriellen Datenstrom vornimmt. Dann kann auch das Zusammenspiel zwischen Steuerungseinrichtung und Einzelmodul bzw. dessen Stellelement überprüft werden, da die Steuerungseinrichtung mittels der Rückkonversion die am Diagnoseanschluß eingespeisten Werte bzw. gemachten Vorgaben erhält. Die Hin- und Rückkonversion können jeweils für sich aber auch in Kombination vorgesehen werden.

Die Verwendung von Einzeldatenströmen erlaubt, wie bereits erwähnt, eine einfache Anbindung verschiedener Module, wobei zugleich eine unnötig hohe Datenrate zu einzelnen Modulen vermieden und die Gesamtübertragungsrate des Hochgeschwindigkeitsdatenstromes entsprechend auf die Einzelmodule verteilt wird. Man kann nun den Datenmanager so ausbilden, daß er für jedes Einzelmodul einen Einzeldatenstrom bereitstellt. Alternativ bietet sich die Möglichkeit, daß mindestens eines der Einzelmodule einen Ausgang aufweist, an den es den zugeführten und von ihm ausgewerteten Einzeldatenstrom durchleitet und über den ein weiteres Einzelmodul versorgt ist. Dieser Einzeldatenstrom wird also in Art eines Datenbusses verwendet, wobei die Länge der Kette im wesentlichen nur durch die Laufzeit der Signale bis zum letzten Einzelmodul und die vom Einzeldatenstrom bereitgestellte Datenrate begrenzt ist. Ein solcher Einzeldatenstrom-Bus kann besonders gut ausgenutzt werden, wenn darin Einzeldatenmodule kombiniert werden, die unterschiedliche Datenraten in die beiden Kommunikationsrichtungen benötigen. Vorteilhafterweise wird man also Einzelmodule mit einer hohen up-load-Rate kombinieren mit Einzelmodulen, die eine hohe down-load-Rate brauchen. Wiederum ist natürlich am Steuergerät bzw. am Dateninterface einzustellen und zu berücksichtigen, wie die Einzelmodule an die Einzeldatenströme angebunden sind, da dann der Datenmanager einfach eine Zerlegung/Zusammenführung des Hochgeschwindigkeitsdatenstromes auf die/aus den Einzeldatenströme(n) ausführen kann. In anderen Worten, der Hochgeschwindigkeitsdatenstrom spiegelt in seiner Zusammensetzung die am Datenmanager erfolgende Aufteilung/Zusammenführung der Datenpakete der Einzeldatenströme wider und wie die Einzelmodule an die Einzeldatenströme angebunden sind, d.h. welchen der Einzeldatenströme ein bestimmtes Einzelmodul empfängt.

Soweit die Erfindung hier mit Bezug auf eine Vorrichtung oder ein Verfahren erläutert wird, gilt entsprechendes für das erfindungsgemäße Verfahren oder die Vorrichtung, auch wenn diese Entsprechung von Vorrichtungs- und Verfahrensmerkmalen nicht ausdrücklich erwähnt sein sollte.

Die Erfindung wird nachfolgend unter Bezugnahme auf die Zeichnungen beispielshalber noch näher erläutert. In den Zeichnungen zeigt:
- Fig. 1: eine schematische Darstellung eines Laser-Scanning-Mikroskops bezüglich der Ansteuerungs- und Datenkommunikation,
- Fig. 2: eine schematische Darstellung des Laser-Scanning-Mikroskops der Fig. 1 bezüglich der Strahlablenkung im Mikroskop,
- Fig.3: eine Darstellung ähnlich der Fig. 1 mit detaillierterer Wiedergabe des Aufbaus von Komponenten des Mikroskops,
- Fig. 4a: eine detailliertere Darstellung einer Datenmanagers des Mikroskops der Fig. 1 und 3,
- Fig. 4b, 4c und 5: die Aufteilung von Datenpaketen durch den Datenmanager der Fig. 4a,
- Fig. 6: ein Einzelmodul des Mikroskops der Fig. 1 und 3 bezüglich der Ansteuerung eines Stellelementes,
- Fig. 7: eine Darstellung ähnlich der Fig. 6 eines weiterentwickelten Einzelmoduls und
- Fig. 8: mehrere Einzelmodule, die Bus-artig an den Datenmanager der Fig. 1 bzw. 3 im dortigen Mikroskop angeschlossen sind.

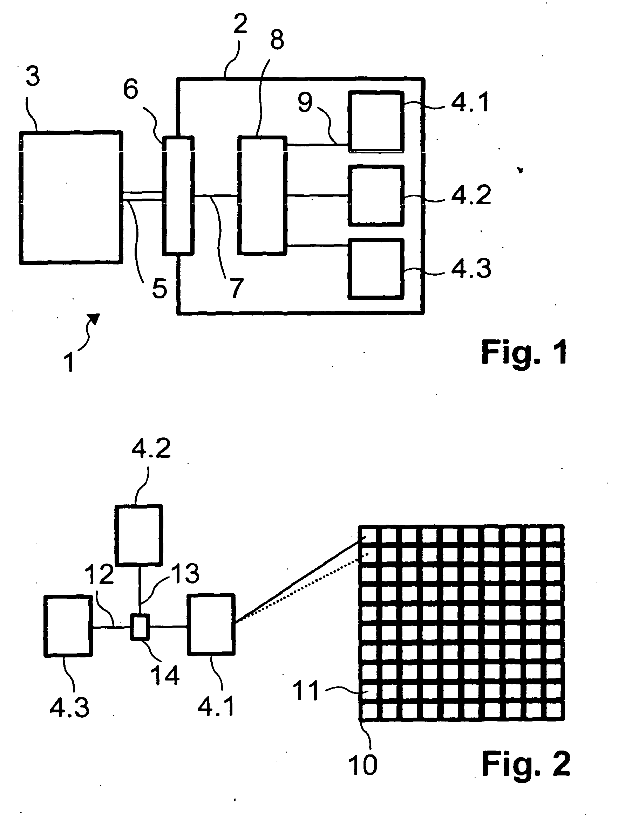

Weiter zeigt beiliegende Tabelle 1 ein Beispiel für eine Datenumsetzung des Mikroskops der Fig. 1.

Die Schemazeichnung der Fig. 1 zeigt ein Laser-Scanning-Mikroskopsystem 1, das im wesentlichen aus einem modularen Mikroskop 2 und einer Steuereinrichtung 3 aufgebaut ist. Das Mikroskop 2 stellt ein vom Mikroskopieprinzip her bekanntes Laser-Scanning-Mikroskop dar, bei dem mittels einer rasternden Beleuchtung sowie einer rasternden Detektion eine Probe abgetastet wird. Das Mikroskop 2 verfügt über dazu geeignete Module 4.1, 4.2 und 4.3 (diese werden zusammenfassend auch mit dem Bezugszeichen 4 versehen), die beispielsweise als Scanner-Modul 4.1, als Detektor-Modul 42 und als Laser-Modul 4.3 ausgebildet sein können. Die Module (die In Fig. 1 dargestellte Anzahl ist rein beispielhaft zu verstehen) werden von der Steuereinrichtung 3 angesteuert, wobei für die Aufnahme jedes Pixel eines Bildes eine bestimmte Ansteuersituation vorliegen muß, damit der erforderliche, abgestimmte Betrieb der Module erreicht ist. Die Steuereinrichtung 3 gibt dazu Ober eine parallele Datenverbindung 5, die beispielsweise als bekannter PCI-Bus ausgebildet sein kann, entsprechende Steuersignal an das Mikroskop 2 ab und empfängt entsprechende Daten vorn Mikroskop 2. Die parallele Datenverbindung 5 Ist mikroskopseitig mit einer Schnittstelle 6 verbunden, die den parallelen Datenstrom in einen seriellen Datenstrom umsetzt und über eine serielle Hochgeschwindigkeits-Datenverbindung 7 abgibt. Diese Datenverbindung führt einen seriellen Hochgeschwindigkeitsdatenstrom. In dem die Daten, welche Ober die parallele Datenverbindung 5 angeliefert wurden, als serielle Abfolge von Datenpaketen geführt werden. Auf die Struktur dieser Datenpakete und die Arbeitsweise der Schnittstelle 6 wird noch eingegangen.

Die nachfolgend erläuterte Funktionsweise sowie der entsprechende Aufbau ist nicht auf eine Kommunikationsrichtung eingeschränkt. Er (sie) kann nur in Richtung auf die Module, in Richtung von den Modulen oder in beiden Richtungen verwirklicht werden. Eine nachfolgend ggf. nur in einer Richtung beschriebene Variante kann somit auch in der Gegenrichtung oder beiden Richtungen verwirklicht werden.

Die seriellen Datenpakete, die über die Datenverbindung 7 geführt sind, werden von einem Datenmanager 8 an im Ausführungsbeispiel drei serielle Moduldatenverbindungen 9 weitergeleitet. Der Datenmanager 8 zerlegt dabei den Hochgeschwindigkeitsdalenstrom in Einzeldatenströme, die dann in die seriellen Moduldatenwerbindungen 9 eingespeist werden.

Die Ansteuerung durch die Steuereinrichtung 3 muß in nahezu Echtzeit die Arbeit der Module abstimmen. Dies sei exemplarisch anhand der Schemazeichnung der Fig. 2 verdeutlicht. In Fig. 2 ist zu sehen, daß von dem Laser-Modul 4.3 bereitgestellte Beisuchtungestrahlung, die z.B. in der Probe Fluoreszenz anregt, Ober das Scanner-Modul 4.1 auf ein Probenfeld 10 gerichtet wird, wobei das Probenfeld 10 durch Abrastern verschiedener Pixel 11 angetastet wird. Die bei einer bestimmten Stellung des Scanner-Moduls 4.1 durch die Beleuchtung mit der Strahlung aus dem Laser-Modul 4.3 bewirkte und zu detektierende Strahlung (z.B. Fluoreszenzstrahlung) an einem der Pixel 11 des Probenfelds 10 wird wiederum durch das Scanner-Modul 4.1 aufgenommen und dann an einem Teiler 14 zum Detektor-Modul 4.2 abgeteilt, das entsprechend die Strahlung nachweist. Es liegt also zwischen dem Laser-Modul 4.3 über den Teiler 14 und das Scanner-Modul 4.1 ein Beleuchtungsstrahlengang vor, und die zu detektierende Strahlung wird über einen Detektionsstrahlengang vom Pixel 11, über das Scanner-Modul 4.1 und den Teiler 14 zum Detektor-Modul 4.2 in einem Meßstrahlengang geführt und am Detektor nachgewiesen.

Es ist ohne weiteres verständlich, daß der Betrieb und auch das Auslesen von Daten der Module 4 für jedes der Pixel 11 aufeinander abgestimmt erfolgen muß. Dies wird von der Steuereinrichtung 3 entsprechend sichergestellt. Beispielsweise wird zuerst das Scanner-Modul 4.1 auf die Koordinaten des Pixels 11 eingestellt. Dann wird das Laser-Modul 4.3 entsprechend aktiviert, so daß eine Beleuchtung des Pixels stattfindet. Zugleich oder um ein bestimmtes Maß zeitversetzt wird eine Auslesung der detektierten Strahlung am Detektor-Modul 4.2 vorgenommen. Die dabei nachgewiesene Strahlungsintensität wird den Pixelkoordinaten zugeordnet, entsprechend abgespeichert und nach Abrastern aller Pixel 11 des Probenfeldes 10 zu einem Bild zusammengefaßt.

Natürlich ist diese Beschreibung sowie die Darstellung der Fig. 2 stark vereinfacht; es sind noch weitere Ansteuerungen erforderlich, beispielsweise Fokusverstellungen, Einstellungen eines Probentisches usw. Aus der Beschreibung ist aber deutlich, daß die Beleuchtungs- und Detektormittel, wie sie beispielsweise durch die Einzel-Module 4 realisiert sein können, pixelsynchron aufeinander abgestimmt betrieben werden müssen, wobei dies sowohl die Ansteuerung der Module als auch ggf. das Auslesen von Daten aus den Modulen (Hinkanal) umfaßt. Wesentlich ist dabei, wie erwähnt, daß im Mikroskop mehrere Module 4 vorgesehen sind, die, wie die Module 4.1-4.3, pixelsynchron zueinander betrieben werden müssen, so daß für die Erzeugung und Detektion von Strahlungsintensität bei jedem Pixel eine bestimmte Einstellung der Module (Rückkanal) bzw. Auslesung der Module erfolgt. Die Auslesung bzw. Ansteuerung kann dabei von Pixel zu Pixel wechseln, so daß beim Übergang von einem Pixel zum nächsten, wie ja beispielsweise in Fig. 2 durch den durchgezogenen bzw. strichpunktierten Strahl auf das Probenfeld 10 symbolisiert ist, eine erneute Zufuhr von Ansteuerwerten bzw. Auslesen von Werten an den Modulen durch die Steuereinrichtung 3 erforderlich ist.

Die im Mikroskopsystem 1 erfolgende Umsetzung der Daten durch die Schnittstelle 6 hat verschiedene Vorteile. Zum einen kann die Steuereinrichtung 3 die Daten nun über eine herkömmliche parallele Datenverbindung 5 absetzen. Es können somit kostengünstige Bauteile für die Steuereinrichtung 3 verwendet werden, unter Umständen kommt sogar ein handelsüblicher PC oder Notebook in Frage. Die Umsetzung dieser parallel angelieferten Daten in eine serielle Hochgeschwindigkeitsdatenverbindung 7 hat den Vorteil, daß im Mikroskop eine einfache Verkabelung möglich ist. Weiter läßt sich ein serieller Datenstrom sehr viel einfacher in die Einzetdatenstrome Ober die serielle Moduldatenverbindungen 9 aufteilen bzw. daraus zusammenfügen, wie nachfolgend noch erläutert wird. Wesentlich in den Daten, die Ober die serielle Hochgeschwindigkeitsdatenverbindung 7 und dann Ober die seriellen Moduldatenverbindungen 9 geführt werden, ist, daß hierbei zumindest in einer Richtung Datenpakete verwendet werden, die kein Protokoll übertragen. Es ist also kein Datenkopf vorhanden, welcher beispielsweise informationen Ober den Sender, den Empfänger, Adreßdaten. Fehlerbehandlungsvorgaben, Zeitangaben etc. enthält, vorhanden. Statt dessen enthalten die Datenpakete dann ausschließlich Datenbits und Typbits, wobei die Datenbits im Rückkanal Steuerdaten und/oder im Hinkanal Meßdaten oder Lagemeldungsdaten wiedergeben und die Typbits eine Angabe Ober den Typ der Datenbits machen. So kann beispielsweise der serielle Hochgeschwindikeitsdatenstrom, der über die Datenverbindung 7 lauft, Datenpakete enthalten, die jeweils zwei 16 Bit-Pakete zu einem 32 Bit-Paket zusammenfassen, wobei extra zu den 2 maf 16 Bit-Rohdaten noch die vier Bits für die Typkodierung (in Bits 32 bis 35) übertragen werden.

Da die Datenkommunikation von Modulen 4 zum Steuergerät 3, keine Adreßinformationen enthält, muß die Zusammenfügung des Hochgeschwindigkeitsdatenstromes die Aufteilung in die seriellen Einzedatenstöme auf die seriellen Moduldalenverbindungen 9 berücksichtigen, insbesondere welche Einzelmodule 4 an die jeweiligen seriellen Moduldatenverbindungen angeschlossen sind.

Dazu kann das Dateninterface 6 die Umsetzung bewerkstelligen. Alternativ kann der Datenmanager 8 die anlaufenden Pakete der seriellen Moduldalenverbindungen 9 nach einem festen Schema an die/in dem Hochgeschwindigkeitsdatenstrom einspeisen. Beispielsweise kann jedes Datenpaket aus der Verbindung zum Modul 4.1 ein erstes, jedes Datenpaket aus der Verbindung zum Modul 4.2 ein zweites und jedes Datenpaket aus der Verbindung zum Modul 4.3 ein drittes Element des Hochgeschwindigkeitsdatenstrome werden. Analoges gilt für den Rückkanal. Für diese Variante ist entweder vorzuschreiben, welches Einzelmodul 4 an welchen Anschluß des Datenmanagers 8 anzuschließen ist, oder in der Steuereinrichtung 3 wird hinterlegt, welches Modul 4 an welchem Anschluß des Datenmanagers 8 hängt.

Zum anderen ist es möglich, daß der Datenmanager bei seiner Weiterteitung an die Einzelmodule 4, die Struktur des Hochgeschwindigkeitsdatenstromes berücksichtigt und eine variable Wandlung der Datenpakete vornimmt.

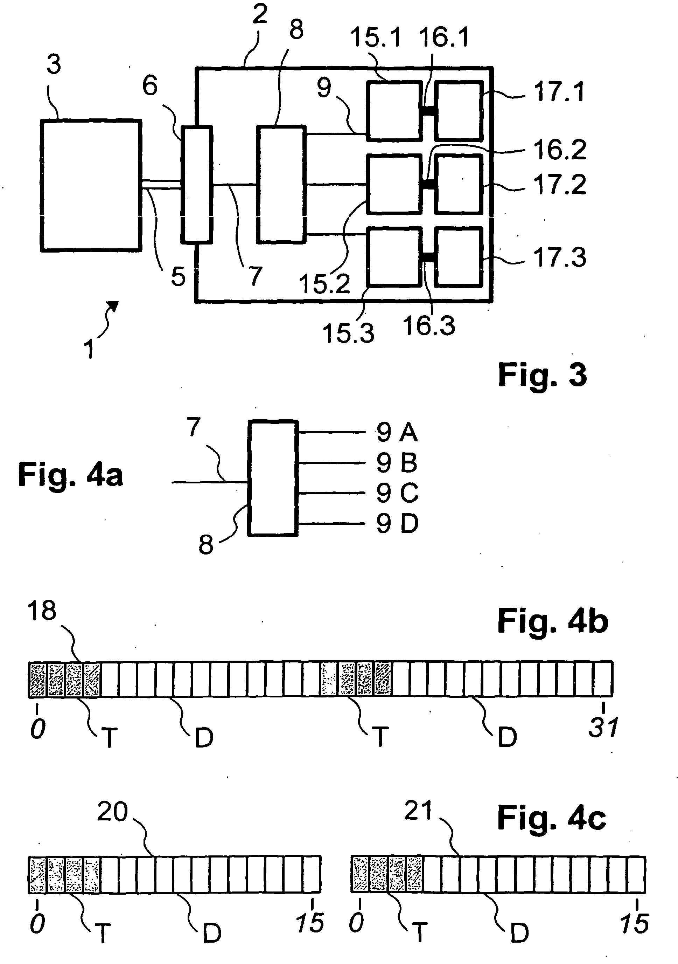

Die Verwendung der Datenpakete der Einzelmodule 4 Ober die seriellen Moduldatenverbindungen 9, erfolgt bei dem in Fig. 3 gezeigten Aufbau der Einzelmodule 4 folgendermaßen (die Erläuterung erfolgt dabei, ohne einschränkend sein zu wollen, für den Rückkanal): In der Bauweise, wie sie in Fig. 3 gezeigt ist, ist jedes Einzelmodul 4 im wesentlichen in zwei Einheiten unterteilt. Die Datenpakete werden von einer Modulbetriebsschaltung 15.1-15.3 (zusammengefaßt unter dem Bezugszeichen 15 angesprochen) aufgenommen und entsprechend in Ansteuersignale für das Modul umgesetzt. Die Modulbetriebsschaltungen 15 die beispielsweise jeweils über eine geeignete CPU, ein ROM, ein RAM sowie ein ASIC verfügen können, fahren also die eingangs erwähnte Typauswertung aus und setzen die in den Datenbits der Datenpakete enthaltenen Daten, je nach Angabe in den Typbits gegebenenfalls in entsprechende Ansteuervorgänge um. Die Ansteuerung erfolgt dann über eine Betiebsverbindung 16.1, 16.2, 16.3 (zusammengefaßt unter dem Bezugszeichen 16). Jede Betriebsverbindung 16 führt zum entsprechenden Modulelement 17.1, 172, 17.3 (zusammengefaßt als Modulelemente 17 angesprochen), welches die entsprechende Funktion im Laser-Scanning-Mikroskop 2 bewirkt. In der Ausführungsform der Fig. 3 umfaßt das Modulelement 17.1 zwei orthogonal zueinander abliegende Galvanometerspiegel, das Modulelement 172 eine PMT und das Modulelement 17.3 einen Beleuchtungslaser. Im Hinkanal wird die Typauswertung durch die Typbitvorgabe ersetzt.

Die entsprechenden Modulbetriebsschaltungen 15 versorgen das jeweilige Modulelement 17 Ober die Beriebsverbindungen 16 mit den entsprechenden Versorgungsspannungen, und Ansteuersignalen bzw. lesen die entsprechenden Lagemeldungs- oder Meßwertsignale aus. Jede Modulbatriebssachaltung 15 prüft deshalb bei der Typauswertung im Rückkanal, ob die Typbits anzeigen, daß die nachfolgenden Datenbits des Datenpakets von der Modulbetriebsschaltung 15 in eine entsprechende Ansteuerung umgesetzt werden müssen. Gleichzeitig kann je nach Modul im Hinkanal die Modulbetriebeschaltung 15 ein entsprechendes Datenpaket, z.B. mit Meßwerten, erzeugen, indem eine entsprechende Kodierung (Typbits) mit entsprechenden Werten (Datenbits) zu einem Datenpaket zusammengesetzt und Ober die serielle Moduldatenverbindung 9 zum Datenmanager 8 und von dort Ober die serielle Hochgeschwindigkeitsdatenverbindung 7 und die Schnittstelle 6 an der parallelen Datenverbindung zur Steuereinrichtung 3 zurückgeleitet wird. Exemplarisch sei diese Funktionsweise nun für Rück- und Hinkanal am Beispiel des Scanner-Moduls erläutert

Zum Abrastern eines Pixels 11 gibt die Steuereinrichtung 3 über die parallele Datenverbindung 5 vor, daß die Scannerspiegel eine bestimmte Stellung einnehmen sollen. Diese Vorgabe wird von der Schnittstelle 6 in ein Datenpaket des seriellen Hochgeschwindlgkellsdatenstroms über die serielle Hochgeschwindigkeitsdatenverbindung 7 umgesetzt. Damit läuft über die serielle Hochgeswindigkeitsdatenverbindung 7 mindestens ein Datenpaket, das Typbits (z.B. vier Typbits) enthält, die anzeigen, daß die nachfolgenden Datenbits die von den Galvanometerspiegeln einzunehmende Stellung (Koordinaten) wiedergeben. Nach Aufteilung des Hochgeschwindigkeitsdatenstromes am Datenmanager 8 läuft dieses Datenpaket im Rückkanal über die serielle Moduldatenverbindung 9 zur Madubeirebsschaltung 15.1. Die Modubetriebsschaltung 15.1 führt eine Typauswertung aller Datenpakete durch, die ihr über ihre serielle Moduldatenverbindung 9 zugeführt sind. Bei dieser Auswertung erkennt sie an den Typbits des besagten Datenpakets, daß neue Koordinaten für die Gatvanometerspiegel vorgegeben werden. Die Modulbetriebsschaltung 15.1 gibt dann entsprechende Spannungssignale Ober die Betriebsdatenverbindung 16.1 an das Modulelement 17.1. d.h. die Gelvanometerspiegel ab. Die Galvanometerspiegel nehmen daraufhin die gewünschte Stellung ein. Da beim Ausfühfungsbeispiel die Galvanomaterspiegel Ober eine Lagemeldung verfügen, erkennt die Moduibetriebsschaltung 15.1 über die Betriebsverbindung 16.1, daß die Galvanometerspiegel die gewünschte Stellung haben und erzeugt daraufhin ein Datenpaket für den Hinkanal, dessen Datenbits die erreichte Stellung der Galvanometerspiegel kodieren und versteht diese Datenbits mit den entsprechenden Typbits, die für diese Art von information im System 1 vorgesehen sind. Über die serielle Moduldatenverbindung 9. den Datenmanager 8, die Hochgeschwindigkeitsdatenverbindung 7, die Schnittstelle 6 sowie die parallele Datenverbindung 5 gelangt diese Meldung zur Steuereinrichtung 3, die dadurch weiß, daß die Galvanometerspiegel, d.h. das Scanner-Modul 4.1 auf die Koordinaten des gewünschten Pixels 11 eingestellt sind. In einem nächsten Schritt bewirkt die Steuereinrichtung 3 dann die Abgabe von Beleuchtungs-Laserstrahlung, indem wiederum eine entsprechende Rückkanal-Ansteuerung Ober die parallele Datenverbindung 5 erfolgt, so daß letztlich die Modulbebebsschaltung 15.3 ein Datenpaket erhält, dessen Datenbits Details über die abzugebende Beleuchtungsstrahlung, beispielsweise Frequenz, Pulsbeginn und Putsdauer eines Laserstrehlungspulses, kodieren, was von der Modulbetriebsschaltung 15.3 an den Typbits des Datenpaketes erkannt wird. Eine gegebenenfalls vorgesehene Statusmoldung über die Abgabe des gewünschten Laserpulses erfolgt ggf. analog wie für das Scanner-Modul erläutert im Hinkanal, Auf analoge Weise bewirkt die Steuereinrichtung 3 auch den Betrieb des Detektor-Moduls, bei dem im Hinkanal über die Betriebsverbindng 16.2 die PMT im Modulelement 17.2 entsprechend angesteuert und Meßwerte zurückgeliefert werden und im Rückkanal entsprechende Datenpakete zur Modulbetriebsschaltung 15.2 gelangen.

In der Ausführungsform der Fig. 1 und 3 führt wie erwähnt, der Datenmanager 8 eine feste Zusammenführung/Aufteilung des über die serielle Hochgeschwindigkeitsdatenverbindung 7 geführten Datenstromes aus. Beispielsweise bewerkstelligt, wie in Fig. 4a gezeigt ist, der Datenmanager eine Speisung aus zwei seriellen Moduldatenverbindungen 9A und 9B, gemäß dem Schema, wie es in den Fig. 4b und 4c gezeigt ist. Natürlich kann auch eine Zuummenführung/Aufteilung aus/in mehr als zwei Moduldstenverbindungen erfolgen; in Fig. 4a sind dazu zwei weitere Moduldatenverbindungen 9C und 9D eingezeichnet. Fig. 4b zeigt ein Hochgeschwindigkeitsdatenpaket (im folgenden kurz HS-Datenpaket) des Hochgeschwindigkeitsdatenstromes, das als 32-bit Wort aufgebaut ist. Der Datenmanager 8 zerlegt dieses 32-bit Wort in zwei 16-bit Wörter bzw. baut es darauf aus, die somit zwei Datenpakete 20 und 21 bilden. Diese Datenpakete werden beispielsweise mit Signalen gemäß dem LVDS-Standard übertragen, wie er z.B. in LVDS-Owner's Manual, 3. Aufl., 2004, National Semiconductor, USA, verfügbar unter www.national.com/appinfo/LOM3.pdf, beschrieben ist. Das erste Datenpaket 20 ist der ersten seriellen Moduldatenverbindungn 9A, das zweite Datenpaket 21 der zweiten Moduldatenverbindung 9B zugeordnet. Entweder durch die Steuereinrichtung 3 oder durch die Schnittstelle 6 ist dafür gesorgt, daß der Aufbau des 32-bit HS-Datenpaketes 18 diese fest eingestellte Aufteilung am Datenmanager 8 entsprechend berücksichtigt.

Eine ebenfalls mögliche Struktur, bei der Typbits nur im Hinkanal verwendet werden, zeigt beiliegende Tabelle 1.

Jedes Datenpaket 20, 21 weist Typbits T und Datenbits D auf. Das 32-bit HS-Datenpaket 18 enthält z.B. beginnend ab dem Bit Nr. 0 sowie ab dem Bit Nr. 16 die Typbits T, an die sich Datenbits D anschließen, die bis einschließlich Bit Nr. 15 bzw. Bit Nr. 31 reichen. In der in Fig. 4b gezeigten Variante sind jeweils vier Typbits T vorgesehen, die in der Figur schraffiert eingezeichnet sind. Durch die Zerlegung in zwei Datenpakete 20 und 21 am Datenmanager 8 weist folglich jedes der 16-bit Wörter am Anfang (z. B. vier) Typbits T auf, an die sich (z. B. 12) Datenbits D anschließen.

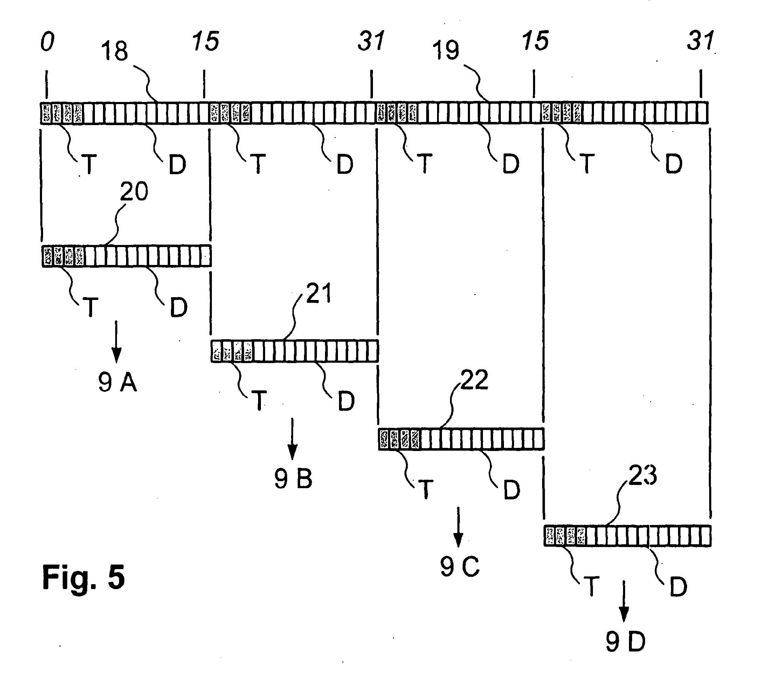

Fig. 5 zeigt einen exemplarischen Fall, bei dem der Datenmanager 8 auch die Moduldatenverbindungen 9C und 9D aufweist. Hierbei sind zwei aufeinanderfolgende 32-bit lange HS-Datenpakete 18 und 19 des Hochgeschwindigkeitsdatenstromes in insgesamt vier 16-bit Datenpakete 20, 21, 22 und 23 geteilt, die an den Moduldatenverbindungen 9A, 9B, 9C und 9D zugeordnet sind. Das Prinzip entspricht dem anhand der Fig. 4b und 4c erläuterten, mit dem Unterschied, daß zwei aufeinanderfolgende HS-Datenpakete 18 und 19 herangezogen werden. Es wird also die erste Hälfte eines ersten HS-Datenpaketes 18 der seriellen Moduldatenverbindung 9A, die zweite Hälfte des ersten HS-Datenpaketes 18 der seriellen Moduldatenverbindung 9B, die erste Hälfte des zweiten HS-Datenpaketes 19 der Moduldatenverbindung 9C und die zweite Hälfte des zweiten HS-Datenpaktes 19 der seriellen Moduldatenverbindung 9D zugeordnet.

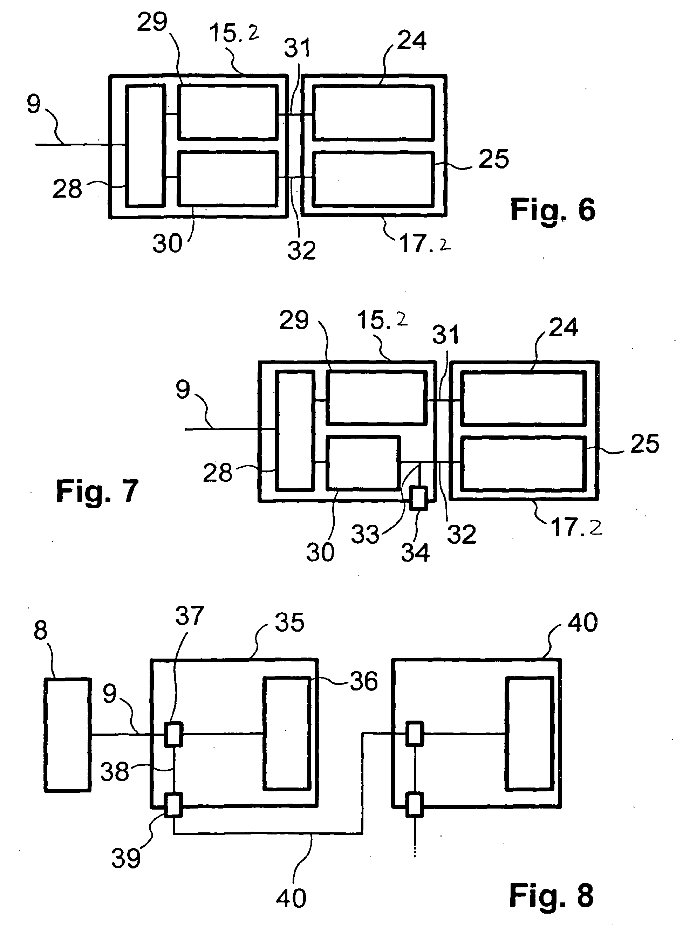

Fig. 6 zeigt detailliert den exemplarischen Aufbau eines Einzelmoduls, hier eines Detektors. Dargestellt ist die Modulbetriebsschaltung 15.2 des Detektors sowie das Modulelement 17.2. Wie zu sehen ist, weißt das Modulelement 17.2 eine schematisch eingezeichnete PMT 24 sowie eine Pinholeverstellmechanik 25 auf, die ein der PMT 24 vorgelagertes Pinhole hinsichtlich Lage und Größe verstellt. Dieses Pinhole ist für die konfokale Abbildung des Laser-Scanning-Mikroskops 2 von essentieller Bedeutung. Lage und Größe des Pinholes 25 messen im Betrieb des Mikroskops 2 bestimmte Werte haben. Eine Verstellung während des Abrasterns des Probenfeldes 2, d.h. eine pixelindividuelle Einstellung ist dagegen in der Regel nicht erforderlich. Dementsprechend ist die Modulbetriebsschaltung 15.2 auch mit zwei Sub-Modulen versehen, einem PMT-Betriebsmodul 29 sowie einem CAN-Busmodul 30. Das PMT-Betriebsmodul führt die bereits erwähnte Ansteuerung und Auslesung der PMT 24 aus und ist dazu Ober eine HS-Verbindung 31 mit der PMT 24 verbunden. Das CAN-Busmodul 30 ist Ober einen CAN-Bus 32 an die Pinholeverstellmechanik 25 angeschlossen und steuert diese mit CAN-Daten gemäß dem bekannten CAN-Bus. Die Modulbetriebssehaltung 15.2 hat also ein Betriebsmodul, das pixelsynchron und in der Regel im Hochfrequenzbereich arbeiten muß. nämlich das PMT-Betriebsmodul 29. sowie ein langsam arbeitendes Bus-Modul, das mit nichtpixelsynchronen Stelldaten die Pinholsverstellung ansteuert; im Ausfuhrungsbeispiel erfolgt dies Ober einen CAN-Bus.

Sowohl die pixelasynchronen Daten wie auch die pixelsynchronen Hochfrequenzdaten werden mit der Modulbetriebsschaltung 15.2 über die serielle Moduldetenverbindung 9 kommuniziert. In den Datenpaketen, die Ober dem Datenstrom der seriellen Moduldatenverbindung 9 fließen und die auch im seriellen Hochgeschwindigkeitsdatenstrom der seriellen Hochgeschwinbidigkeitsdatenverbindung 7 geführt werden, sind also nicht nur pixelsynchrone (Hochfrequenz-) Daten enthalten, sondern auch pixelasynchrone Stelldaten eingebettet; letztere können zumindest in einer Richtung mit einer bestimmten Typkennung auch eine herkömmliche Adreßengabe verwenden. Die entsprechende Aufteilung/Zusammenführung dieser unterschledlichen Datenarten im Einzelmoduls bewirkt ein Splitter 28, der einerseits mit der seriellen Moduldatenverbindung 9 verbunden ist und andererseits die Hochfrequenz- bzw. Stelldaten an das PMT-Betriebsmodul 29 bzw. das CAN-Buamodul 30 weiterleitet. Dazu führt er eine Typbewertung oder -auswertung durch. Natürlich ist dieser anhand des Detektor-Moduls erläuterte Aufbau grundsätzlich für weitere oder alle Detektions- und Beleuchtungsmittel in einer Ausführungsform der Erfindung möglich.

Diese Ausführungsform hat den Vorteil, daß die Steuereinrichtung 3 nicht nur diejenigen Teile der Beleuchtungs- und Detektormittel in Echtzeit ansteuern kann, die pixelsynchroner Ansteuerung bzw. Auslesung bedürfen, sondern auch Teile des Mikroskops 2. die im Betrieb nur eine bestimmte Stellung haben müssen, jedoch nicht im Pixeltakt verstellt werden müssen. Zugleich kann die Ansteuerung dieser Stellelemente mit herkömmlichen (langsamen) Bus-Systemen, wie dem CAN-Bus erfolgen, ohne daß eine separate Verkabelung des Mikroskops 2 gemäß diesem Bus vorgesehen sein muß. Dadurch kann eine solche Busschnittstelle am Steuergerät 3 und auch am Mikroskop 2 selbst entfallen.

Fig. 7 zeigt eine Weiterbildung eines über eine serielle Moduldatenverbindung 9 angesteuerten Einzelmoduls gemäß Fig. 6. Der Aufbau entspricht im wesentlichen dem der Fig. 6, so daß dort beschriebene Elemente nicht noch einmal erläutert werden müssen. Die Weiterbildung liegt darin, daß in der Modulbetriebsschaltung 15.2 am CAN-Bus 32 eine-CAN-Bus-Abzweigung 33 vorgesehen ist, die zu einem extern zugänglichen CAN-Bus-Anschluß 34 mündet. Dieser Anschluß 34 kann entweder direkt an der Modulbetriebsschaltung 15.2 vorgesehen sein, oder auch an geeigneter anderer Stelle am Mikroskop 2 angeordnet werden, insbesondere ist eine Anordnung an einem Diagnosesteckfeld möglich. Über den CAN-Bus-Anschluß 34 wird nun auf einfache Art und Weise die richtige Funktion der Pinholeverstellmechanik überprüft, indem aus einem Diagnosegerät am Anschluß 34 entsprechende CAN-Bus-Signale eingespeist werden. Auch kann die Arbeitsweise des entsprechenden Moduls einfach durch Mitlesen der am CAN-Bus-Anschluß 34 ankommenden Signale, die das CAN-Busmodul 30 über den CAN-Bus 32 zur Pinholeverstellmechanik 25 liefert, überprüft werden. Schließlich kann in einer nochmaligen Weiterbildung auch vorgesehen werden, daß das CAN-Busmodul 30 am Anschluß 34 eingespeiste CAN-Daten rückkonvertiert und über den Splitter 28 in den Moduldatenstrom der seriellen Moduldatenverbindung 9 einspeist. Somit ist auch eine Rückwärtsdiagnose möglich.

In den erläuterten Ausführungsbeispielen nimmt der Datenmanager 8 eine Zusammenfügung/Aufteilung des Hochgeschwindigkeitsdatenstromes der seriellen Hochgeschwindigkeitsdatenverbindung 7 aus/in Einzeldatenströme vor, die mit seriellen Einzel-Moduldatenverbindungen 9 verbunden sind, beispielsweise die Verbindungen 9A, 9B und gegebenenfalls 9C und 9D. Dabei wurden Fallkonstellationen erläutert, bei denen jedes Einzelmodul eine eigenständige serielle Moduldatenverbindung hat. Dies ist jedoch nicht zwingend erforderlich. Die Moduldatenverbindung 9 vom Datenmanager 8 kann beispielsweise auch in Art eines Busses verwendet werden. Dazu ist an den entsprechenden Einzelmodulen, die exemplarisch als Einzelmodule 35 und 40 in Fig. 8 gezeigt sind, eingangsseitig ein Abzweigknoten 37 vorgesehen, der sämtliche über die Moduldatenverbindung 9 zugeführten Datenpakete auf einen Weiterleitungsast 38 leitet bzw. ankommende Datenpakete zur seriellen Moduldatenverbindung 9 durchschleust. Der Weiterleitungsast 38 endet in einem Busanschluß 39 über den mittels einer Busverbindung 40 ein weiteres Einzelmodul 40, das im wesentlichen dem Einzelmodul 35 entspricht, angeschlossen ist. Somit teilen sich mehrere Einzelmodule eine serielle Moduldatenverbindung in Art eines Busses, wobei wiederum die Typvorgabe bzw. Typauswertung, die innerhalb des Modules 35 bzw. 40 von einer Auswerteeinheit 36 durchgeführt wird, entscheidet, welche Daten die Datenbits enthalten, woraus (implizit) folgt, ob das jeweilige Modul ein Datenpaket verwertet. Eine solche Auswerteeinheit 36 ist prinzipiell in jedem Einzelmodul entweder als eigenständiges Element vorgesehen oder seine Funktion wird von einem anderen Bauelement ausgeführt.

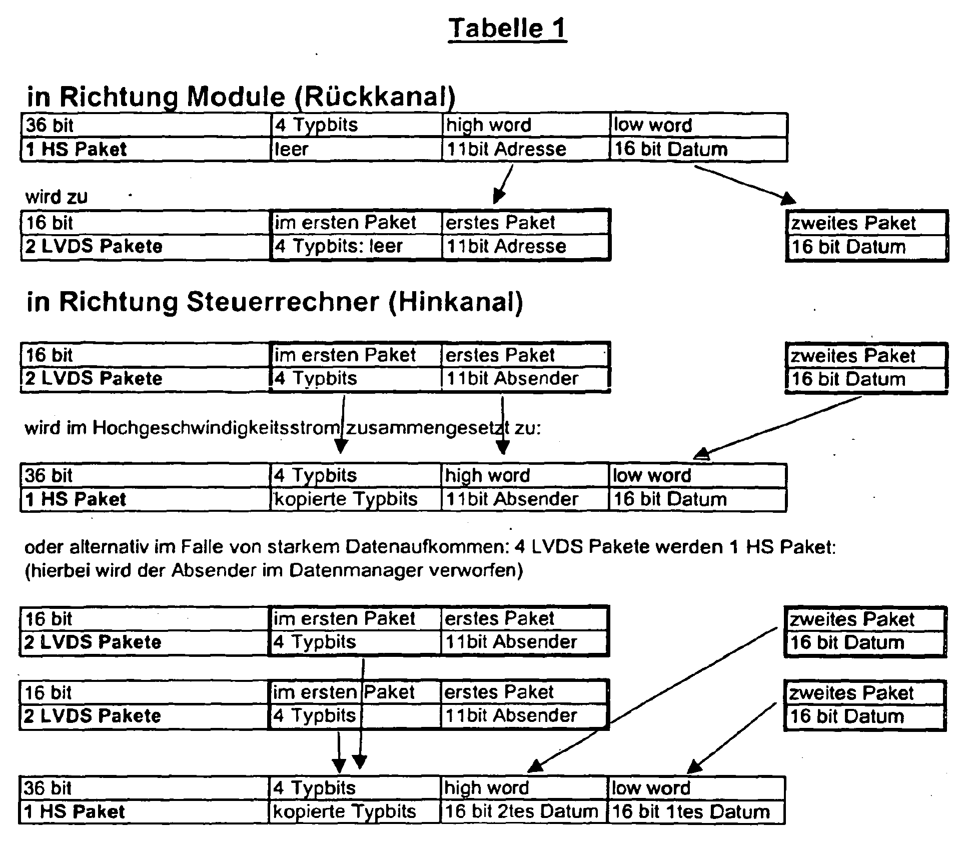

## Patentansprüche

1. Laser-Scanning-Mikroskop mit
- Proben-Beleuchtungs- und Detektormitteln (4.1, 4.2, 4.3), die derart ausgestaltet sind, daß sie zur Bildgewinnung eine Probe (12) rasternd beleuchten und detektierend abtasten,
- einer Echtzeit-Steuerungseinrichtung (3), welche derart ausgestaltet ist, daß sie die Beleuchtungs- und Detektormittel (4.1, 4.2, 4.3) zur Beleuchtung und Detektion ansteuert und Detektionssignale ausliest, wobei die Steuerungseinrichtung (3) weiter derart ausgestaltet ist, daß sie Ansteuerung und Auslesen synchron zu einem die Rasterung festlegenden Pixeltakt durchführt,
- einem zwischen die Steuerungseinrichtung (3) und die Beleuchtungs- und Detektormittel (4.1, 4.2, 4.3) geschaltetens Dateninterface (6), das derart ausgestaltet ist, daß es mit der Steuerungseinrichtung (3) über einen parallelen, bidirektionalen Datenstrom (5) und mit den Beleuchtungs- und Detektormitteln (4.1, 4.2, 4.3) über einen seriellen Datenstrom (7) kommuniziert und dazu eine Datenkonversion von parallel in seriell bzw. zurück ausführt,
**dadurch gekennzeichnet, daß**
- die Beleuchtungs- und Detektormittel (4.1, 4.2, 4.3) und das Dateninterface (6) derart ausgestaltet sind, daß der serielle Datenstrom (7) zwischen den Beleuchtungs- und Detektormitteln (4.1, 4.2, 4.3) und dem Dateninterface (6) zumindest bei Kommunikation in Richtung zum Dateninterface (6) ausschließlich aus Datenpaketen (18, 19) welche ausschließlich Datenbits und Typbits umfassen, aufgebaut ist, wobei
die Datenbits Daten von den Beleuchtungs- und Detektormitteln (4.1, 4.2, 4.3) enthalten und die Typbits die Art der in den Datenbits kodierten Daten kodieren und
- wobei in den Beleuchtungs- und Detektormitteln (4.1, 4.2, 4.3) und der Steuerungseinrichtung (3) Typinformationen abgelegt sind, die sich auf Verarbeitungsaufgaben für durch die Typbits kodierten Datenarten beziehen, und die Beleuchtungs- und Detektormittel (4.1, 4.2, 4.3) derart ausgestaltet sind, daß sie beim Senden in einer Typvorgabe für die Datenart die Typits passend setzen und die Steuerungseinrichtung (3) derart ausgestaltet ist daß sie in einer Typauswertung anhand der Typbits die zugehörige Datenart ermittelt und die in den Datenbits kodierten Daten der ermittelten Datenart entsprechend verarbeitet.

2. Mikroskop nach Anspruch 1, **dadurch gekennzeichnet, daß**
- die Beleuchtungs- und Detektormittel (4.1, 4.2, 4.3) und das Dateninterface (6) derart ausgestaltet sind, daß der serielle Datenstrom (7) zwischen den Beleuchtungs- und Detektormitteln (4.1, 4.2, 4.3) und dem Dateninterface (6) auch bei Kommunikation in Richtung zu den Beleuchtungs- und Detektormitteln (4.1, 4.2, 4.3) ausschließlich aus Datenpaketen (18, 19), welche ausschließlich Datenbits und Typbits umfassen, aufgebaut ist,
- die Steuerungseinrichtung (3) derart ausgestaltet ist, daß sie beim Senden in einer Typvorgabe für die Datenart die Typbits passend setzt, und
- die Beleuchtungs- und Detektormittel (4.1, 4.2, 4.3) derart ausgestaltet sind, daß sie in einer Typauswertung anhand der Typbits die zugehörige Datenart ermitteln und die in den Datenbits kodierten Daten der ermittelten Datenart entsprechend verarbeiten.

3. Mikroskop nach Anspruch 42, **dadurch gekennzeichnet, daß**
- die Beleuchtungs- und Detektormittel mehrere Einzelmodule (4.1, 4.2, 4.3) aufweisen, die bei der Beleuchtung und Abtastung zusammenwirken,
- zwischen das Dateninterface (6) und die Einzelmodule (4.1, 4.2, 4.3) der Beleuchtungs- und Detektormittel ein Datenmanager (8) geschaltet ist, der derart ausgebildet ist, daß er mit den Einzelmodulen kommuniziert,
- die Einzelmodule (4.1, 4.2, 4.3) derart ausgebildet sind, daß sie serielle Einzeldatenströme (9) zum Datenmanager (8) senden, die ebenfalls ausschließlich aus Datenbits und Typbits aufgebaut sind,
- der Datenmanager (8) derart ausgebildet ist, daß er in Kommunikationsrichtung zum Dateninterface (6) die empfangenen seriellen Einzeldatenströme (9) in den seriellen Datenstrom (7) zusammenführtund in Kommunikationsrichtung zu den Einzelmodulen (4.1, 4.2, 4.3) den seriellen Datenstrom (7) in die seriellen Einzeldatenströme (9) aufteilt und
- die Typinformationen in den Einzelmodulen (4.1, 4.2, 4.3), oder dem Dateninterface (6) abgelegt sind und die Einzelmodule oder das Dateninterface derart ausgebildet sind/ist, daß sie/es die Typbits einer Typauswertung zur Bestimmung der Datenart unterziehen/unterzieht.

4. Mikroskop nach Anspruch 3, **dadurch gekennzeichnet, daß** die Einzeldatenströme (19) Datenpakete (20, 21, 22, 23) enthalten, die ein Bruchteil so lang sind, wie die Datenpakete (18, 19) des seriellen Datenstromes (7).

5. Mikroskop nach Anspruch 3 oder 4, **dadurch gekennzeichnet, daß** mehrere Einzelmodule (35, 40) an einen gemeinsamen Einzeldatenstrom (9) angeschlossen sind und diesen als Datenbus nutzen, wobei die Typbits implizit festlegen, welches Einzelmodul (35, 40) die in den Datenbits kodierten Daten verarbeitet bzw. sendet.

6. Mikroskop nach einem der Ansprüche 2 bis 5, **dadurch gekennzeichnet, daß**
- die Beleuchtungs- und Detektormittel (4.1, 4.2, 4.3) Stellelemente (25) aufweisen, welche derart ausgebildet sind, daß sie im Mikroskopbetrieb asynchron zum Pixeltakt auslesbar und/oder ansteuerbar sind und entsprechende Stelldaten zwischen den Stellelementen (25) und der Steuerungseinrichtung (3) austauschen, wobei
- die Stelldaten als Datenbits in den seriellen Datenstrom (7) eingebettet sind.

7. Mikroskop nach Anspruch 6, **dadurch gekennzeichnet, daß** mindestens ein Einzelmodul (4.1, 4.2, 4.3) so ausgebildet ist, daß es die Stelldaten aus dem ihm zugeführten seriellen Einzeldatenstrom (9) extrahiert, einen CAN-Bus (32) für mindestens ein dem Einzelmodul zugeordnetes Stellelement (25) bereitstellt und ein Konvertierungselement (30) aufweist, das derart ausgebildet ist, daß es die extrahierten Stelldaten in CAN-Busdaten konvertiert.

8. Mikroskop nach Anspruch 7, **gekennzeichnet durch** einen Diagnoseanschluß (34) am CAN-Bus (32), der für Diagnose- und Prüfzwecke zu einer direkten CAN-Busansteuerung des Stellelementes (25) ausgebildet ist.

9. Mikroskop nach Anspruch 8, **dadurch gekennzeichnet, daß** das Konvertierungselement (30) derart ausgebildet ist, daß es am Diagnoseanschluß (34) eingespeiste CAN-Busdaten in den seriellen Einzeldatenstrom (9) rückkonvertiert.

10. Mikroskop nach Anspruch 9, **dadurch gekennzeichnet, daß** das Konvertierungselement (30) derart ausgebildet ist, daß es die rückkonvertierten Daten mit Typbits versieht.

11. Verfahren zur Datenkommunikation in einem Laser-Scanning-Mikroskop (1), bei dem eine Probe (12) mittels Proben-Beleuchtungs- und Detektormitteln (4.1, 4.2, 4.3) rastend beleuchtet und detektierend abgetastet wird, wobei für das Laser-Scanning-Mikroskop eine Steuerungseinrichtung (3) verwendet wird und die Beleuchtungs- und Detektormittel über einen seriellen Datenstrom pixelsynchron angesteuert und ausgelesen werden, und wobei zwischen die Steuerungseinrichtung (3) und die Beleuchtungs- und Detektormittel (4.1, 4.2, 4.3) ein Dateninterface (6) geschaltet wird, das mit der Steuerungseinrichtung (3) über einen parallelen, bidirektionalen Datenstrom (5) und mit den Beleuchtungs- und Detektormitteln (4.1, 4.2, 4.3) über einen seriellen Datenstrom (7) kommuniziert und dazu eine Datenkonversion von parallel in seriell bzw. zurück ausführt, **dadurch gekennzeichnet, daß**
- der serielle Datenstrom (7) zwischen den Beleuchtungs- und Detektormitteln (4.1, 4.2, 4.3) und dem Dateninterface (6) zumindest bei Kommunikation in Richtung zum Dateninterface (6) ausschließlich aus Datenpaketen (18, 19), welche ausschließlich Datenbits und Typbits umfassen, aufgebaut ist, wobei
die Datenbits Daten von den Beleuchtungs- und Detektormitteln (4.1, 4.2, 4.3) enthalten und die Typbits die Art der in den Datenbits enthaltenen Daten kodieren, und
- wobei in den Beleuchtungs- und Detektormitteln (4.1, 4.2, 4.3) und, der Steuerungseinrichtung (3) Typinformationen abgelegt sind, die sich auf Verarbeitungsaufgaben für durch die Typbits kodierten Datenarten beziehen, und die Beleuchtungs- und Detektormittel (4.1, 4.2, 4.3) beim Senden in einer Typvorgabe für die Datenart die passenden Typbits setzen und die Steuerungseinrichtung (3) in einer Typauswertung anhand der Typbits die zugehörige Datenart ermittelt und die in den Datenbits kodierten Daten entsprechend der ermittelten Datenart verarbeitet.

12. Verfahren nach Anspruch 11, **dadurch gekennzeichnet, daß**
- der serielle Datenstrom (7) zwischen den Beleuchtungs- und Detektormitteln (4.1, 4.2, 4.3) und dem Dateninterface (6) auch bei Kommunikation in Richtung zu den Beleuchtungs- und Detektormitteln (4.1, 4.2, 4.3) ausschließlich aus Datenpaketen (18, 19), welche ausschließlich Datenbits und Typbits umfassen, aufgebaut ist,
- die Steuerungseinrichtung (3) beim Senden in einer Typvorgabe für die Datenart die passenden Typbits setzt und die Beleuchtungs- und Detektormittel (4.1, 4.2, 4.3) in einer Typauswertung anhand der Typbits die zugehörige Datenart ermitteln und die in den Datenbits kodierten Daten entsprechend der ermittelten Datenart verarbeiten.

13. Verfahren nach Anspruch 12, **dadurch gekennzeichnet, daß** für die Beleuchtungs- und Detektormittel mehrere Einzelmodule (4.1, 4.2, 4.3) verwendet werden, die Einzeldatenströme (9) zu einem Datenmanager (8) senden, wobei die Einzeldatenströme (9) jeweils ebenfalls ausschließlich aus Datenbits und Typbits aufgebaut werden, und daß mittels des Datenmanagers (8) die Einzeldatenströme (9) zum seriellen Datenstrom (7) zusammengeführt werden bzw. der serielle Datenstrom (7) in die mehreren Einzeldatenströme (9) für die Einzelmodule (4.1, 4.2, 4.3) aufgeteilt wird.

14. Verfahren nach Anspruch 13, **dadurch gekennzeichnet, daß** die Einzeldatenströme (19) Datenpakete (20, 21, 22, 23) enthalten, die ein Bruchteil so lang sind, wie die Datenpakete (18, 19) des Hochgeschwindigkeitsdatenstromes (7).

15. Verfahren nach einem der Ansprüche 12 bis 14, **dadurch gekennzeichnet, daß** ein Einzeldatenstrom als Datenbus mehreren Einzelmodulen (4.1, 4.2, 4.3) zugeführt wird.

16. Verfahren nach einem der Ansprüche 11 bis 14, **dadurch gekennzeichnet, daß** in den Beleuchtungs- und Detektormitteln (4.1, 4.2, 4.3) Stellelemente verwendet werden, die mittels Stelldaten asynchron zum Pixeltakt angesteuert und/oder ausgelesen werden, wobei die Stelldaten als Datenbits in den seriellen Datenstrom eingebettet werden.

## Claims

1. Laser scanning microscope with
- sample illumination and detector means (4.1, 4.2, 4.3), which are embodied such that they, for imaging purposes, illuminate a sample (12) in a scanning fashion and scan the latter in a detecting fashion,
- a real-time control apparatus (3), which is embodied such that it actuates the illumination and detector means (4.1, 4.2, 4.3) for illumination and detection purposes and reads out detection signals, the control apparatus (3) furthermore being embodied such that it carries out actuation and readout synchronized to a pixel clock, which sets the scanning,
- a data interface (6), which is connected between the control apparatus (3) and the illumination and detector means (4.1, 4.2, 4.3) and embodied such that it communicates with the control apparatus (3) via a parallel, bidirectional data stream (5) and with the illumination and detector means (4.1, 4.2, 4.3) via a serial data stream (7) and for this purpose carries out a data conversion from parallel to serial or back again,
**characterized in that**
- the illumination and detector means (4.1, 4.2, 4.3) and the data interface (6) are embodied such that the serial data stream (7) between the illumination and detector means (4.1, 4.2, 4.3) and the data interface (6), at least when communicating in the direction to the data interface (6), is only made up of data packets (18, 19), which only comprise data bits and type bits,
- the data bits containing data from the illumination and detector means (4.1, 4.2, 4.3) and the type bits encoding the type of the data encoded in the data bits, and
- type information being stored in the illumination and detector means (4.1, 4.2, 4.3) and in the control apparatus (3), which type information relates to processing objects for data types encoded by the type bits, and the illumination and detector means (4.1, 4.2, 4.3) being embodied such that they fittingly place the type bits when transmitting in a type prescription for the data types, and the control apparatus (3) being embodied such that it establishes the associated data type on the basis of the type bits when evaluating the type and accordingly processes the data of the established data type, which is encoded in the data bits.

2. Microscope according to Claim 1, **characterized in that**
- the illumination and detector means (4.1, 4.2, 4.3) and the data interface (6) are embodied such that the serial data stream (7) between the illumination and detector means (4.1, 4.2, 4.3) and the data interface (6), even when communicating in the direction to the illumination and detector means (4.1, 4.2, 4.3), is only made up of data packets (18, 19), which only comprise data bits and type bits,
- the control apparatus (3) is embodied such that it fittingly places the type bits when transmitting in a type prescription for the data type, and
- the illumination and detector means (4.1, 4.2, 4.3) are embodied such that they establish the associated data type on the basis of the type bits when evaluating the type and accordingly process the data of the established data type, which is encoded in the data bits.

3. Microscope according to Claim 2, **characterized in that**
- the illumination and detector means have a plurality of individual modules (4.1, 4.2, 4.3), which interact when illuminating and scanning,
- a data manager (8) is connected between the data interface (6) and the individual modules (4.1, 4.2, 4.3) of the illumination and detector means and embodied such that it communicates with the individual modules,
- the individual modules (4.1, 4.2, 4.3) are embodied such that they transmit individual data streams (9), which are likewise only made up of data bits and type bits, to the data manager (8),
- the data manager (8) is embodied such that, in the communication direction to the data interface (6), it combines the received serial individual data streams (9) into the serial data stream (7) and, in the communication direction to the individual modules (4.1, 4.2, 4.3), it divides the serial data stream (7) into the serial individual data streams (9) and
- the type information is stored in the individual modules (4.1, 4.2, 4.3) or in the data interface (6) and the individual modules or the data interface are/is embodied such that they/it subject(s) the type bits to a type evaluation in order to determine the data type.

4. Microscope according to Claim 3, **characterized in that** the individual data streams (19) contain data packets (20, 21, 22, 23), which are a fraction of the length of the data packets (18, 19) of the serial data stream (7).

5. Microscope according to Claim 3 or 4, **characterized in that** a plurality of individual modules (35, 40) are connected to a common individual data stream (9) and use the latter as a data bus, with the type bits implicitly setting which individual module (35, 40) processes or transmits the data encoded in the data bits.

6. Microscope according to one of Claims 2 to 5, **characterized in that**
- the illumination and detector means (4.1, 4.2, 4.3) have actuators (25), which are embodied such that they can be read and/or actuated asynchronously to the pixel clock during microscope operation and interchange appropriate actuation data between the actuators (25) and the control apparatus (3),
- the actuation data being embedded into the serial data stream (7) as data bits.

7. Microscope according to Claim 6, **characterized in that** at least one individual module (4.1, 4.2, 4.3) is embodied such that it extracts the actuation data from the serial individual data stream (9) supplied thereto, provides a CAN bus (32) for at least one actuator (25) associated with the individual module and has a conversion element (30), which is embodied such that it converts the extracted actuation data into CAN bus data.

8. Microscope according to Claim 7, **characterized by** a diagnosis connector (34) on the CAN bus (32), the former for diagnosis and monitoring purposes being embodied to form a direct CAN bus actuation of the actuator (25).

9. Microscope according to Claim 8, **characterized in that** the conversion element (30) is embodied such that it reconverts CAN bus data fed in at the diagnosis connector (34) into the serial individual data stream (9).

10. Microscope according to Claim 9, **characterized in that** the conversion element (30) is embodied such that it supplies type bits to the reconverted data.

11. Method for data communication in a laser scanning microscope (1), in which a sample (12) is illuminated in a scanning fashion and scanned in a detecting fashion by means of sample illumination and detector means (4.1, 4.2, 4.3), a control apparatus (3) being used for the laser scanning microscope and the illumination and detector means being actuated and read out in a pixel-synchronized fashion via a serial data stream and a data interface (6) being connected between the control apparatus (3) and the illumination and detector means (4.1, 4.2, 4.3), said data interface communicating with the control apparatus (3) via a parallel, bidirectional data stream (5) and with the illumination and detector means (4.1, 4.2, 4.3) via a serial data stream (7), and for this purpose carrying out a data conversion from parallel into serial and back again,
**characterized in that**
- the serial data stream (7) between the illumination and detector means (4.1, 4.2, 4.3) and the data interface (6), at least when communicating in the direction to the data interface (6), is only made up of data packets (18, 19), which only comprise data bits and type bits,
- the data bits containing data from the illumination and detector means (4.1, 4.2, 4.3) and the type bits encoding the type of the data contained in the data bits, and
- type information being stored in the illumination and detector means (4.1, 4.2, 4.3) and in the control apparatus (3), which type information relates to processing objects for data types encoded by the type bits, and the illumination and detector means (4.1, 4.2, 4.3) placing the fitting type bits when transmitting in a type prescription for the data type and the control apparatus (3) establishing the associated data type on the basis of the type bits when evaluating the type and processing the data, which is encoded in the data bits, in accordance with the established data type.

12. Method according to Claim 11, **characterized in that**
- the serial data stream (7) between the illumination and detector means (4.1, 4.2, 4.3) and the data interface (6), even when communicating in the direction to the illumination and detector means (4.1, 4.2, 4.3), is only made up of data packets (18, 19), which only comprise data bits and type bits,
- the control apparatus (3) places the fitting type bits when transmitting in a type prescription for the data type, and
- the illumination and detector means (4.1, 4.2, 4.3) establish the associated data type on the basis of the type bits when evaluating the type and process the data, which is encoded in the data bits, in accordance with the established data type.

13. Method according to Claim 12, **characterized in that** a plurality of individual modules (4.1, 4.2, 4.3) are used for the illumination and detector means, which individual modules transmit individual data streams (9) to a data manager (8), the individual data streams (9) respectively likewise only being made up of data bits and type bits, and **in that** the data manager (8) is used to combine the individual data streams (9) into the serial data stream (7) or divide the serial data stream (7) into the plurality of individual data streams (9) for the individual modules (4.1, 4.2, 4.3).

14. Method according to Claim 13, **characterized in that** the individual data streams (19) contain data packets (20, 21, 22, 23), which are a fraction of the length of the data packets (18, 19) of the high-speed data stream (7).

15. Method according to one of Claims 12 to 14, **characterized in that** an individual data stream is supplied to a plurality of individual modules (4.1, 4.2, 4.3) as a data bus.

16. Method according to one of Claims 11 to 14, **characterized in that** actuators are used in the illumination and detector means (4.1, 4.2, 4.3), which actuators are read out and/or actuated asynchronously to the pixel clock by means of actuation data, the actuation data being embedded into the serial data stream as data bits.

## Revendications

1. Microscope à balayage par laser comprenant
- des moyens d'éclairement et de détection d'échantillon (4.1, 4.2, 4.3) qui sont conçus pour éclairer par balayage et pour soumettre à un balayage de détection un échantillon (12) afin d'obtenir des images,
- un dispositif de commande en temps réel (3) qui est conçu de manière à commander les moyens d'éclairement et de détection (4.1, 4.2, 4.3) pour l'éclairement et la détection et à lire des signaux de détection, dans lequel le dispositif de commande (3) est en outre conçu pour effectuer la commande et la lecture en synchronisme avec une horloge de pixels définissant la trame de balayage,
- une interface de données (6) reliée entre le dispositif de commande (3) et les moyens d'éclairement et de détection (4.1, 4.2, 4.3), qui est conçue de manière à communiquer avec l'unité de commande (3) par l'intermédiaire d'un flux de données parallèle bidirectionnel (5) et avec les moyens d'éclairement et de détection (4.1, 4.2, 4.3) par l'intermédiaire d'un flux de données série (7) et effectue à cet effet une conversion parallèle à série ou inversement, **caractérisé en ce que**
- les moyens d'éclairement et de détection (4.1, 4.2, 4.3) et l'interface de données (6) sont conçus pour que le flux de données série (7) entre les moyens d'éclairement et de détection (4.1, 4.2, 4.3) et l'interface de données (6) soit exclusivement constitué de paquets de données (18, 19) qui comprennent exclusivement des bits de données et des bits de type au moins lors d'une communication dirigée vers l'interface de données (6), dans lequel
- les bits de données contiennent des données des moyens d'éclairement et de détection (4.1, 4.2, 4.3) et les bits de type codent le type des données codées dans les bits de données, et
- dans lequel on stocke dans les moyens d'éclairement et de détection (4.1, 4.2, 4.3) et dans le dispositif de commande (3) des informations de type qui concernent des fonctions de traitement correspondant à des types de données codés par l'intermédiaire des bits de type, et les moyens d'éclairement et de détection (4.1, 4.2, 4.3) sont conçus pour régler de manière appropriée à l'émission les bits de type dans une consigne de type correspondant aux types de données et le dispositif de commande (3) est conçu pour déterminer les types de données associés lors d'une évaluation du type à partir des bits de type et pour traiter les données codées dans les bits de données conformément au type de données déterminé.

2. Microscope selon la revendication 1, **caractérisé en ce que** :
- les moyens d'éclairement et de détection (4.1, 4.2, 4.3) et l'interface de données (6) sont conçus pour que le flux de données série (7) entre les moyens d'éclairement et de détection (4.1, 4.2, 4.3) et l'interface de données (6) soient également exclusivement constitués de paquets de données (18, 19) qui comprennent exclusivement des bits de données et des bits de type lors d'une communication dirigée vers les moyens d'éclairement et de détection (4.1, 4.2, 4.3),
- le dispositif de commande (3) est conçu pour positionner de manière appropriée à l'émission les bits de type dans une consigne de type correspondant au type de données, et
- les moyens d'éclairement et de détection (4.1, 4.2, 4.3) sont conçus pour déterminer le type de données associé lors d'une évaluation du type à partir des bits de type et pour traiter les données codées dans les bits de données conformément au type de données déterminé.

3. Microscope selon la revendication 2, **caractérisé en ce que** :
- les moyens d'éclairement et de détection comprennent plusieurs modules individuels (4.1, 4.2, 4.3) qui coopèrent lors de l'éclairement et du balayage,
- un gestionnaire de données (8) est relié entre l'interface de données (6) et les modules individuels (4.1, 4.2, 4.3) des moyens d'éclairement et de détection, lequel gestionnaire est configuré pour communiquer avec les modules individuels,
- les modules individuels (4.1, 4.2, 4.3) sont configurés pour envoyer au gestionnaire de données (8) des flux de données série individuels (9) qui sont exclusivement constitués de bits de données et de bits de type,
- le gestionnaire de données (8) est configuré pour combiner les flux de données série reçus (9) lors d'une communication dirigée vers l'interface de données (6) dans le flux de données série (7) et pour séparer le flux de données série (7) en les flux de données série individuels (9) lors d'une communication dirigée vers les modules individuels (4.1, 4.2, 4.3), et
- les informations de type sont stockées dans les modules individuels (4.1, 4.2, 4.3) ou dans l'interface de données (6) et les modules individuels ou l'interface de données sont/est configuré(s)/(e) pour soumettre à une évaluation du type les bits de type afin de déterminer le type de données.

4. Microscope selon la revendication 3, **caractérisé en ce que** les flux de données individuels (19) comprennent des paquets de données (20, 21, 22, 23) dont la longueur représente une fraction de celle des paquets de données (18, 19) du flux de données série (7).

5. Microscope selon la revendication 3 ou 4, **caractérisé en ce que** plusieurs modules individuels (35, 40) sont connectés à un flux de données individuel commun (9) et **en ce qu'**ils utilisent ce dernier en tant que bus de données, dans lequel les bits de type définissent implicitement les modules individuels (35, 40) qui traitent ou envoient les données codées dans les bits de données.

6. Microscope selon l'une des revendication 2 à 5, **caractérisé en ce que**
- les moyens d'éclairement et de détection (4.1, 4.2, 4.3) comprennent des actionneurs (25) qui sont configurés pour pouvoir être lus et/ou commandés lors du fonctionnement du microscope de manière asynchrone par rapport à l'horloge de pixels, et des données d'actionnement correspondantes sont échangées entre les actionneurs (25) et le dispositif de commande (3), dans lequel
- les données d'actionnement sont incorporées au flux de données série (7) en tant que bits de données.

7. Microscope selon la revendication 6, **caractérisé en ce qu'**au moins un module individuel (4.1, 4.2, 4.3) est configuré pour extraire les données d'actionnement du flux de données série individuel (9) qui lui est fourni, **en ce qu'**il fournit un bus CAN (32) à au moins un actionneur (25) associé au module individuel et **en ce qu'**il comprend un élément de conversion (30) qui est configuré pour convertir les données d'actionnement extraites en des données de bus CAN.

8. Microscope selon la revendication 7, **caractérisé par** une connexion de diagnostic (34) au bus CAN (32) qui est conçue à des fins de diagnostics et de tests destinés à une commande directe par bus CAN de l'actionneur (25).

9. Microscope selon la revendication 8, **caractérisé en ce que** l'élément de conversion (30) est configuré pour reconvertir des données de bus CAN appliquées à la connexion de diagnostic (34) en le flux de données série individuel (9).

10. Microscope selon la revendication 9, **caractérisé en ce que** l'élément de conversion (30) est conçu de manière à doter les données reconverties de bits de type.

11. Procédé de communication de données dans un microscope à balayage par laser (1) dans lequel un échantillon (12) est éclairé par balayage et est soumis à un balayage de détection à l'aide de moyens d'éclairement et de détection d'échantillon (4.1, 4.2, 4.3), dans lequel un dispositif de commande (3) est utilisé pour le microscope à balayage par laser et les moyens d'éclairement et de détection sont commandés et lus en synchronisme avec des pixels par l'intermédiaire d'un flux de données série, et dans lequel une interface de données (6) est reliée entre l'unité de commande (3) et les moyens d'éclairement et de détection (4.1, 4.2, 4.3), celle-ci communiquant avec le dispositif de commande (3) par l'intermédiaire d'un flux de données bidirectionnel parallèle (5) et avec les moyens d'éclairement et de détection (4.1, 4.2, 4.3) par l'intermédiaire d'un flux de données série (7), et effectuant à cet effet une conversion de données parallèle à série ou inversement,
**caractérisé en ce que**
- le flux de données série (7) entre les moyens d'éclairement et de détection (4.1, 4.2, 4.3) et l'interface de données (6) est exclusivement constitué de paquets de données (18, 19) qui comprennent exclusivement des bits de données et des bits de type, au moins lors d'une communication dirigée vers l'interface de données (6), dans lequel
- les bits de données contiennent des données des moyens d'éclairement et de détection (4.1, 4.2, 4.3) et les bits de type codent le type des données contenues dans les bits de données, et
- dans lequel on stocke dans les moyens d'éclairement et de détection (4.1, 4.2, 4.3) et dans le dispositif de commande (3) des informations de type concernant des fonctions de traitement correspondant à des types de données codés par l'intermédiaire des bits de type, et les moyens d'éclairement et de détection (4.1, 4.2, 4.3) règlent à l'émission les bits de type appropriés dans une consigne de type correspondant aux types de données et le dispositif de commande (3) détermine les types de données associés lors d'une évaluation du type à partir des bits de type et traite les données codées dans les bits de données conformément au type de données déterminé.

12. Procédé selon la revendication 11, **caractérisé en ce que** :
- le flux de données série (7) entre les moyens d'éclairement et de détection (4.1, 4.2, 4.3) et l'interface de données (6) est également exclusivement constitué de paquets de données (18, 19) qui comprennent exclusivement des bits de données et des bits de type lors d'une communication dirigée vers les moyens d'éclairement et de détection (4.1, 4.2, 4.3),
- le dispositif de commande (3) règle à l'émission les bits de type appropriés pour le type de données dans une consigne de type, et
- les moyens d'éclairement et de détection (4.1, 4.2, 4.3) déterminent le type de données associé lors d'une évaluation du type à partir des bits de type et traite les données codées dans les bits de données conformément au type de données déterminé.

13. Procédé selon la revendication 12, **caractérisé en ce que** pour les moyens d'éclairement et de détection, on utilise plusieurs modules individuels (4.1, 4.2, 4.3) qui envoient les flux de données individuels (9) à un gestionnaire de données (8), dans lequel les flux de données individuels (9) sont chacun également exclusivement constitués de bits de données et de bits de type et **en ce qu'**au moyen du gestionnaire de données (8), les flux de données individuels (9) sont réunis en un flux de données série (7) ou le flux de données série (7) est séparé en plusieurs flux de données individuels (9) destinés aux modules individuels (4.1, 4.2, 4.3).

14. Procédé selon la revendication 13, **caractérisé en ce que** les flux de données individuel (19) contiennent des paquets de données (20, 21, 22, 23) qui ont une longueur égale à une fraction des paquets de données (18, 19) du flux de données (7).

15. Procédé selon l'une des revendications 12 à 14, **caractérisé en ce qu'**un flux de données individuel est appliqué à plusieurs modules individuels (4.1, 4.2, 4.3) en tant que bus de données.

16. Procédé selon l'une des revendications 11 à 14, **caractérisé en ce que** des actionneurs sont utilisés dans les moyens d'éclairement et de détection (4.1, 4.2, 4.3), lesquels actionneurs sont commandés et/ou lus au moyen de données d'actionnement asynchrones par rapport à l'horloge de pixels, dans lequel les données d'actionnement sont incorporées au flux de données série en tant que bits de données.
